Europäisches Patentamt

European Patent Office

Office européen des brevets

Veröffentlichungsnummer: **0 297 522**

**A2**

# EUROPÄISCHE PATENTANMELDUNG

(21) Anmeldenummer: 88110339.4

(22) Anmeldetag: 29.06.88

(51) Int. Cl.⁴: **B29C 51/32 , B29C 51/44**

(30) Priorität: 01.07.87 DE 3721780
05.08.87 DE 3725932
22.01.88 DE 3801854

(43) Veröffentlichungstag der Anmeldung:
04.01.89 Patentblatt 89/01

(84) Benannte Vertragsstaaten:
AT BE CH DE ES FR GB GR IT LI LU NL SE

(71) Anmelder: VTM-VERFAHRENSTECHNIK AG
Balmfluthstrasse 4
CH-4500 Feldbrunnen/Solothurn(CH)

(72) Erfinder: Knape, Michael
Stettiner Strasse 2a
D-4370 Marl(DE)

(74) Vertreter: Herrmann-Trentepohl, Werner,
Dipl.-Ing. et al
Postfach 1140 Schaeferstrasse 18
D-4690 Herne 1(DE)

(54) Verfahren und Vorrichtung zur Herstellung von Kunststoffteilen.

(57) Bei einem Verfahren zur Herstellung von Kunststoffteilen, insbesondere von Kunststofformlingen,
die aus mindestens einer erwärmten Kunststoffolie in
einer Verformungsvorrichtung zu Formlingen tiefgezogen und die Formlinge sodann in einer Trennvorrichtung aus dem Formlingsverband herausgetrennt
werden und mit Hilfe einer Transportvorrichtung zu
nachfolgenden Bearbeitungsstationen, wie einer Bedruckungseinheit oder einer Stapelvorrichtung u. s.
w. gefördert werden, ist erfindungsgemäß vorgesehen, daß die Verformung und die Trennung der
einzelnen Formlinge aus der noch warmen Folie in
einer Station direkt aufeinanderfolgend durchgeführt
werden, wobei zuerst die Verformung stattfindet und
dann die Trennung durch Bandstahlabschnitt erfolgt,
während die Form noch im geschlossenen Zustand
verweilt. Mit Hilfe dieses Verfahrens können auch
Formlinge hergestellt werden, die aus zwei übereinanderliegenden Folien und dazwischen angeordneten Schichten aus einem saugfähigen Material bestehen.

FIG.1

Xerox Copy Centre

Die Erfindung betrifft ein Verfahren zur Herstellung von Kunststoffteilen gemäß dem Oberbegriff des Anspruchs 1. sowie eine Vorrichtung zur Durchführung des Verfahrens.

Bei einem bekannten Verfahren dieser Art werden Kunststoff-Massenartikel, die Schalen zum Abpacken von Fleisch. Eierverpackungen, Becher und Teller aus einer zuvor in einer Heizstrecke erwärmten Kunststoffolie, z. B. aus Polystyrol, Polyvenylchlorid oder Polyäthylen, in einer Formpresse mittels spezieller Werkzeuge durch Vakuum- oder Preßluft-Tiefziehen hergestellt. In dieser Fertigungsphase sind die tiefgezogenen Kunststofteile, nachfolgend kurz Formlinge genannt, noch an ihren Rändern zu einer Formlingseinheit miteinander verbunden. Die Trennung der Formlinge erfolgt mittels einer Stanzpresse. Zwischen Formpresse und Stanzpresse können noch verschiedene Bearbeitungseinheiten, wie eine Bedruckungseinheit, eine Lochstation, eine Perforiereinrichtung oder eine Einlegeeinrichtung, sowie nach der Stanzpresse eine Stapelvorrichtung angeordnet sein. Die Transportvorrichtung für den Transport der Folie, der Formlingseinheit und der Formlinge von Bearbeitungseinheit zu Bearbeitungseinheit besteht in aller Regel aus einem die beiden Ränder der Folie untergreifenden, intermittierend angetriebenen, speziellen Kettenförderer. Während dieser Transportwege ist die Formlingseinheit einerseits aufgrund des Abkühlungsprozesses einer Größenänderung durch Schrumpfung und andererseits einer Verschiebung innerhalb jeden Arbeitstaktes aufgrund der sich summierenden Bewegungsspiele in den Gelenken der einzelnen Kettenglieder unterworfen. Die dadurch schon innerhalb eines Arbeitstaktes entstehende Abweichung des Positions-Ist-Wertes der Formlingseinheit von ihrem Positions-Soll-Wert wird umo größer, je weiter der Abstand zwischen zwei benachbarten Bearbeitungseinheiten ist.

Um nun jeden Bearbeitungsvorgang in den einzelnen Bearbeitungseinheiten sowie insbesondere das Trennen der Formlinge in der Stanzpresse an exakt den gewünschten Stellen erfolgen zu lassen, muß zur Vermeidung von Ungleichmäßigkeiten bei jeder Bearbeitungseinheit ein Ausrichtungsvorgang stattfinden. Dieser Ausrichtungsvorgang erfolgt nach dem bekannten Verfahren dadurch, daß sich entweder die Formlinge infolge ihrer besonders konischen Form oder, wenn dies nicht der Fall ist, mittels besonderer im Folienband miteingeformter Zentrierkonen beim Schließen des jeweiligen Bearbeitungswerkzeuges im betreffenden Werkzeug selbst zentrieren.

Äußerst problematisch wird diese Art der Ausrichtung bei sehr flachen Kunststoffteilen mit einem sehr niedrigen Seitenwandkonus oder insbesondere dann, wenn kein ausreichender Platz im Formlingsband für separate Zentrierkonen vorhanden ist. Dies führt bei den einzelnen Bearbeitungseinheiten unweigerlich zu Unregelmäßigkeiten und beim Trennen der Formlinge an der Stanzpresse gar zu ungleich verlaufenden Schnittkanten, kurzum zu einer höheren Ausschußrate, was sich wiederum in den Gesamtkosten niederschlägt.

Es ist daher in der DE-OS 28 52 697 ein Verfahren vorgeschlagen worden, durch das die Ungenauigkeiten der ausgestanzten Ränder der Formlinge vermieden werden. Diese geschieht durch eine elektromotorische Stanzverstellung der Stanzstation gegenüber der Formstation. Die Verstellung der Stanzstation erfolgt über eine Korrektursteuerung, die mit Hilfe von Fotozellen arbeitet, die in der Formstation in die Formlinge eingestanzte Lochmarken abtasten und die Stanzstation entsprechend positiv oder auch negativ in Folienlaufrichtung korrigieren.

Die Korrekturgenauigkeit weist jedoch trotz wesentlicher Verbesserung noch folgende Mängel auf:

1. Eine hundertprozentige Übereinstimmung der Ränder zwischen Fomrkontur und Stanzkontur wird immer noch nicht erreicht.

2. Das durch die Fotozellen bewirkte Verstellen der Stanze zwecks Korrektur bedingt einen gewissen Zeitverlust, welcher die Kapazität der Maschine negativ beeinflußt.

3. Beim Vorschub aus der Formstation und Einschub in die Stanzstation erkaltet die Folie. Die Formlinge werden durch Schrumpfung deformiert und somit auch bei exakter Korrektur der Stanzstation unregelmäßig ausgestanzt.

4. Durch die Abkühlung der Formlinge sind wesentlich höhere Stanzkräfte erforderlich.

5. Die Gesamtlänge der Maschine ist durch die getrennte Anordnung von Formstation und Stanzstation zu groß.

6. Der Energieverbrauch ist relativ hoch, bedingt durch den Einsatz von zusätzlichen Antrieben, wie

    a) Antrieb der Formstation,

    b) Antrieb der Lochstation,

    c) Antreib des Verfahrweges des Stanzkorrektur,

    d) höhere Reibungskräfte und dadurch bedingte höhere Motorleistung im Folienvorschub.

7. Bei dem bekannten Verfahren treten hohe Werkzeugkosten durch die Verwendung separater Form- und Stanzwerkzeuge auf.

8. Das bedingt auch erhebliche Umrüstzeiten bei Umstellung der Maschine auf andere Artikel.

9. Expandiertes Polystyrol hat die Eigenschaft, daß beim Expandieren sich relativ kompakte Außenhäute bilden, während sich in der Mitte durch den Treibstoff eine mit Luftblasen versetzte Schaumkontur bildet.

2

Das Nachschäumen der Folie in der Heizzone einer Thermoformmaschine bewirkt die Expansion der Folienstärke von der Ausgangsstärke auf der Mehrfache, abhängig von der Temperatur und der Aufheizzeit. Die Außenhäute bleiben dabei fest kompakt. Wenn nun der Formling nach dem bekannten Verfahren in separaten Stationen geformt und gestanzt wird, so erkaltet die Folie zwischen dem Formvorgang und dem Stanzvorgang. Die Außenhäute sind dann nicht mehr plastisch durch die erhöhte Temperatur, sondern spröde. Während des Stanzvorganges werden die Formlinge nach dem Prinzip des Scherschnittes getrennt. Es verbleiben also an den Schnittkanten dünne Kompakthäute und dazwischen eine geschäumte Zwischenschicht. Die Homogenität der Stanzränder ist also nicht gegeben. Der Schnitt ist rauh und ungleichmäßig. Dafür gibt es folgenden Grund: Wie oben schon ausgeführt, ist die Folie beim Trennvorgang nach dem bekannten Verfahren bereits erkaltet und konsistent. Durch die Schwerkräfte werden alle drei Strukturen (obere Außenhaut, Zwischenschicht, untere Außenhaut) durch eine gleich schnelle Bewegung getrennt. Dabei werden nacheinander die drei Strukturen separat voneinander getrennt. D. h., daß an den Schnittkanten die Schaumstruktur freiliegt. An dieser Stelle kann daher z. B. Wasser eindrigen. Außerdem sind diese Außenkanten auch durch mechanische Beeinträchtigungen zerstörerischen Kräften ausgesetzt.

Daher liegt ausgehend von diesem Stand der Technik der Erfindung die Aufgabe zugrunde, ein Verfahren der eingangs genannten Art so zu führen, sowie eine Vorrichtung zur Durchführung dieses Verfahrens zu schaffen, unter Vermeidung der vorgenannten Nachteile in kostengünstiger Weise sowohl die durch den Transport als auch die durch die Schrumpfung der Formlinge sich ergebenden Positionsabweichungen auszuschließen und damit zu einer ausschußfreien Fertigung auch sehr flacher Kunststoffteile zu gelangen.

Diese Aufgabe wird erfindungsgemäß durch die Merkmale des Patentanspruchs 1 gelöst. Weitere vorteilhafte Ausgestaltungen der Erfindung sind Gegenstand der Unteransprüche.

Dadurch, daß die Verformung und der Tennvorgang in ein- und derselben Station vor sich gehen, wobei der Trennvorgang bereits dann eingesetzt, wenn das verformte, noch warme Teil noch zwischen den beiden Formhälften, der Prägung und der Formtasse eingeschlossen ist, ist es gewährleistet, daß die Formlinge exakt entlang den gewünschten Umfangslinien aus dem Formlingsverband herausgetrennt werden. Auch Formlinge aus Kompaktfolien, deren einzelne Lagen verschiedene Wärmedehnungskoeffizienten aufweisen können, weisen eine hundertprozentige Exaktheit ihrer Umfangslinien auf. Diese hundertprozentige Exaktheit ist nicht nur in ästetischer Hinsicht von Bedeutung, sondern auch im Hinblick auf eine automatische Verpackung und Entstapelung im Verpackungsautomat eine Notwendigkeit.

In weiterer Vorteil des erfindungsgemäßen Verfahrens ist darin zu sehen, daß ein Formling, z. B. eine Schale im Negativverfahren hergestellt werden kann, ohne daß ein Positivwerkzeug benötigt wird. Um z. B. eine Schale negativ mit 20 mm Höhe herzustellen, braucht man, um die Höhe einzuhalten, kein doppeltes Werkzeug. Durch entsprechende Gestaltung des Negativwerkzeuges und der Höhendifferenz zwischen Schnitt- und Formwerkzeug erhält man eine exakte Kalibrierung der Schalenhöhe.

Mit anderen Worten: Der Abstand von der tiefsten Stelle des Negativwerkzeuges bis zur Oberfläche der Stanzplatte in der Trennungsendphase wird einmal eingestallt und immer exakt eingehalten. Die Folie wird bei der Verformung durch das Anlegen eines Vakuums in die Form hineingezogen. Auch wenn durch ungleichmäßige Heizungseinstellung die Folie in Längs- oder/und in Querrichtung unterschiedlich aufgeschäumt worden ist, so wird die Höhe der einzelnen Formlinge trotzdem immer gleich bleiben.

Da die Folie zwischen dem Verformungsvorgang und dem Trennvorgang keiner Temperaturänderung unterworfen ist, somit auch keine Schrumpfungen eintreten können, ist ein exaktes Trennen an den dafür vorgesehenen Konturen gewährleistet. Weiterhin bietet das vorgenannte Verfahren den Vorteil, daß durch die noch warme plastische Folie der Trennvorgang erleichtert wird, also geringere Stanzkräfte erforderlich sind. Dadurch, daß der Verformungsvorgang und der Trennvorgang in einer einzigen Station stattfinden, ist auch die Baulänge der gesamten Maschine wesentlich kürzer. Auch die Werkzeugkosten können somit gesenkt werden, ebenso wie die Umrüstzeiten bei Umstellung der Maschine auf andere Artikel.

Durch die Verwendung von Bandstählen in der Trennvorrichtung ergibt sich als weiterer Vorteil der Erfindung, daß im Gegensatz zum gewohnten Durchfallschnitt keine Stege zwischen den einzelnen Formlingen als Abfallprodukt auftreten. Somit ist es möglich, die Formlinge eng nebeneinander aus der Kunststoffolie herauszuformen.

Ein weiterer Vorteil der Erfindung ergibt sich aus den Merkmalen des Anspruchs 2. Dadurch, daß die verformte, noch warme Folie von speziell geformten Bandstahlschneiden an den Trennlinien durchstoßen wird, wobei beim Schneidvorgang die Ränder des Formlings durch den Bandstahl zwischen diesen und der Stanzplatte eingeklemmt werden, werden die Ränder in dieser Position verschweist. Beim Durchfallschnitt ergaben sich insbesondere bei Kompaktfolien beim bereits abgekühlten Formlingsverband unschöne, im Querschnitt konkave Ränder. Das führte mitunter dazu, daß sich im Randbereich der Verband der einzelnen Schichten in der Kunststoffolie löste bzw. z. B. Wasser eintreten konnte. Beim Verfahren zieht die Bandstahlschneide eine der beiden glatten Außenhäute der Folie auf die gegenüberliegende Außenhaut, führt sie somit um die dazwischenliegende Schaumstruktur herum und verschweißt sie miteinander.

Mit den Merkmalen des Anspruchs 3 ist es möglich, auf die Stanzplatte, die beim Verformungs- und Trennvorgang mit der Bandstahlschneide zusammenwirkt, zu verzichten. Eine derartige Stanzplatte stellt an die Fertigung hohe Ansprüche. So muß sie exakt eben geschliffen sein und zusätzlich gehärtet werden. Durch das Zusammenwirken zweier Bandstähle gemäß Anspruch 3 wird dieser Aufwand auf ein Minimum reduziert. Ein weiterer Vorteil dieser Ausgestaltung ist es, daß die Werkzeugkosten herabgesetzt werden. Darüberhinaus ist der Platzbedarf bei der Anordnung gemäß Anspruch 3 ebenfalls reduziert. Ein weiterer Vorteil liegt darin, daß ein herkömmlicher Spannrahmen entfällt. Die Abdichtung der Formfläche gerade bei Vakuumverformung erfolgt durch die Bandstähle. Darüberhinaus ist es mit Hilfe der zusammenwirkenden Bandstähle erheblich leichter, auch Formlinge herzustellen, deren Schnittkanten auf verschiedenen Ebenen liegen, so z. B. bei Kunststoffschalen mit integriertem Deckel, wie sie z. B. zur Verpackung von Hamburgern verwendet werden.

Durch die Merkmale der Ansprüch 4 und 5 ist es möglich, die Form der schnittkanten der Formlinge zu modifizieren. Ist die Schneide des Bandstahls so gerichtet, daß sie vom Bodenbereich des Formlings wegweist, ergibt sich zwar ein exakter Schnittrand, welcher jedoch konisch nach außen gerichtet und somit scharfkantig ist. Ist die Schneide des Bandstahls hingegen zum Bondenbereich des Formlings gerichtet, wird beim Formvorgang der Rand des Formlings durch den vorbeistreichenden schneidenden Bandstahl etwas nach innen verformt, so daß sich eine etwas abgerundete Kante ergibt.

Durch die Verwendung der Bandstähle ist es möglich, den Rand des Formlings auch zu verschweißen, wenn die Formlinge mit kaltem Schnitt aus der noch warmen Folie herausgetrennt werden.

Darüberhinaus ist es jedoch möglich, den Verschweißvorgang dadurch zu erleichtern, daß gemäß Anspruch 6 die Bandstähle aufgeheizt werden. Das hat den weiteren Vorteil, daß die Stanzkräfte weiter verringert werden können.

Über den Vorteil der Einsparung einer ganzen Station (separate Stanzstation) hinaus ist durch den Vorschlag des Anspruchs 7 eine weitere Reduzierung des maschinellen Aufwandes gegeben.

Sowohl der Verformungshub als auch der Trennhub werden durch ein- und denselben Druckmittelzylinder bewirkt. Dieser Druckmittelzylinder kann z. B. so ausgestaltet sein, daß er von pneumatischer Arbeitsweise auf hydraulische Arbeitsweise umschaltbar ist. Dabei führt der Druckmittelzylinder zuerst einen pneumatischen Eilhub zum Verformen aus und danach einen hydraulischen Krafthub. Das Verformen erfolgt in der Endphase des Eilhubes und der Langsamphase des Krafthubes. Die gesamte Folie ist noch plastisch. Über den Bandstahlschnitt zieht sich die Folie im Eilhub und im Teil des Krafthubes, ohne ausgestanzt zu werden. Die Folie erhält so die Konturen des Formwerkzeuges und des Bandstahlschnittes. Nach der gewünschten Verformung des Formlings geht der Krafthub in seine Endposition und stanzt den Rest der Folienstärke durch. Die Endposition ist beliebig einstellbar und richtet sich nach der Folienstärke.

Im Gegensatz zu den Ansprüchen 7 und 8 kann der Verformungs- und Trennhub auch durch einen mechanischen Antrieb bewirkt werden.

Nach dem Anspruch 10 können die Formlinge in bekannter Weise sowohl durch eine Druck- als auch durch eine Vakuumverformung aus der erwärmten Kunststoffolie ausgeformt werden.

Wird die Verformung durch Vakuum bewirkt, so können gemäß Anspruch 11 die Vakuumkanäle als Druckluftkanäle für den Auswurf des fertigen Formlings dienen.

Gemäß dem Merkmal des Anspruchs 12 kann die Kunststoffolie sowohl positiv als auch negativ verformt werden. Bei der Negativverformung wird die Kunststoffolie durch Anlegen eines Vakuums in die Form hineingezogen, bei der Positivverformung wird die Kunststoffolie durch Druckluft und/oder Vakuum über eine Form gezogen. Es ist natürlich auch möglich, den Formling mit Hilfe des Zusammenwirkens von Patrize und Matrize auszuformen.

Mit Hilfe des erfindungsgemäßen Verfahrens können gemäß Anspruch 13 auch Kunststoffformlinge hergestellt werden, die aus zwei übereinanderliegend angeordneten Kunststoffolienbahnen mit zwischen diesen Kunststoffolienbahnen angeordneter Zelluloseschicht hergestellt werden.

Gemäß Anspruch 13 wird in einem ersten Schritt eine der Kunststoffolienbahnen auf ihrer zur anderen Kunststoffolienbahn hinweisenden Oberfläche mit Zelluloseausschnitten versehen. Die Anordnung der Ausschnitte auf der Kunststoffolie entspricht dabei der späteren Anordnung der Formlinge im Formlingsverband. Die Abmessungen der Ausschnitte entsprechen in etwa den Abmessungen der Bodenflächen der späteren Formlinge, wobei seitliche Toleranzen zwischen den Umrissen der Ausschnitte und den Umrissen des Bodenbereichs vorgesehen sind. Bei der Ausformung und der späteren Trennung der Formlinge aus dem Formlingsverband werden die Kunststoffolien direkt miteinander verbunden und im Kantenbereich zusätzlich miteinander verschweißt. Es entsteht somit ein Formling, der lediglich im Bodenbereich dreilagig ausgebildet ist, so daß die Kunststofffolien im Randbereich innig miteinander verbunden werden können. Ein Aufspringen des Kantenbereichs ist somit ausgeschlossen. Bei bekannten Formlingen aus zwei Kunststoffolien mit dazwischenliegender Zelluloseschicht erstreckte sich die Zelluloseschicht von einem Rand des Formlings über den Bodenbreich bis zum anderen Rand des Formlings. Aufgrund dieser Anordnung war eine innige Verbindung des Randbereiches durch die dazwischenliegende Zelluloseschicht nicht gewährleistet. Die Formlinge platzten im Kantenbreich auf, und konnten somit einer weiteren Verwendung nicht mehr zugeführt werden. Derartige Formlinge dienen beispielsweise zur Verpackung von Frischfleisch, wobei die Zelluloseschicht über die Löcher im Lochmuster der einen Folienbahn das aus dem Fleisch austretende Blut bwz. den Fleischsaft aufsaugte. Dieser Fleischsaft bzw. das Blut konnte über die aufgesprungenen Kanten des Formlings nach außen austreten, was zum einen unhygienisch ist und zum anderen den Formling bzw. die Verpackung unansehnlich werden ließ. Beim Formling nach dem erfindungsgemäßen Verfahren ist ein Aufspringen des Kantenbereichs ausgeschlossen, so daß eine Austreten von blut bzw. Fleischsaft in diesem Bereich nicht mehr möglich ist.

Ferner ergibt sich der Vorteil, daß die Lage aus saugfähigem Material zur Verbesserung ihres Wirkungsgerades dicker ausgeführt werden kann als bei dem vorbekannten Verfahren, da eine derartige Verdickung den Randbereich nicht beeinflußt. Unabhängig von der Dicke der Zwischenschicht ist weiterhin eine innige Verbindung der Kunststofffolien im Randbereich gewährleistet. Beim vorbekannten Verfahren hat eine Verdickung der Zwischenschicht zur Folge, daß die Nachteile beim Abdichten im Kantenbereich des Formlings noch vergrößert werden.

Ein weiterer Vorteil des erfindungsgemäßen Verfahrens ist darin zu sehen, daß der Verschnitt, der keinerlei Zellstoffmaterial aufweist, einer Wiederverwendung zuegführt werden kann.

Vorteilhafterweise werden gemäß Anspruch 14 die Ausschnitte mit Hilfe einer automatischen Etikettiervorrichtung an der Folienbahn angebracht. Die Etikettiervorrichtung besitzt einen Ausleger, der aus der Fertigungslinie unter ein neben der Fertigungslinie angeordnetes Magazin gefahren wird. Der Ausleger weist dabei eine der Anzahl der aufzubringenden Ausschnitte entsprechende Anzahl von Werkzeugen zur Aufnahme der Ausschnitte auf. Der Ausleger ist heb- und senkbar. Im angehobenen Zustand nimmt er die Ausschnitte aus dem Magazin auf, wird abgesenkt, in die Fertigungsline zurückgefahren, wobei er im angehobenen Zustand die Ausschnitte auf der Folienbahn anbringt. Danach fährt der Ausleger wieder unteer das Magazin, während die Folienbahnen um einen Takt weiterbewegt werden, so daß wieder Platz für die Anbringung weiterer Ausschnitte auf der Folienbahn vorhanden ist. Die Verwendung einer Etikettiervorrichtung hat nicht nur den Vorteil einer rationelleren und somit schnelleren Herstellung der Formlinge. Auch in bezug auf die Genauigkeit der Anbringung der Ausschnitte auf der Folienbahn ergeben sich Vorteile. Es ist somit gewährleistet, daß die Ausschnitte immer exakt an den Stellen auf der Folienbahn angebracht werden, die den späteren Böden der Formlinge entsprechen.

Vorteilhafterweise wird das Lochmuster in eine der Folien durch Lochrollen eingebracht, derart, daß sich die Lochmuster genau an den Stellen in der Folie befinden, die den Bodenbereich der Formlinge, bzw. der Lage der Ausschnitte auf der Folie entsprechen.

Gegenstand des Anspruchs 15 ist eine erfindungsgemäße Vorrichtung zur Durchführung des oben genannten Verfahrens. Sie besteht im wesentlichen aus einer auf einer Stanzplatte befestigten Prägung und/oder einer darauf zu bewegbaren, an einem Hubtisch angeordneten Formtasse. Zwischen den einzelnen Ausformungen der Form sind Aussparungen zur Führung von Schneidwerkzeugen, die aus Bandstahl bestehen, vorgesehen. Diese Bandstähle verfügen an ihrem freien, der Stanzplate zugewandten Ende über eine Schneide, die entweder spitz zulaufen kann, aber auch anders geformt sein kann.

In einer weiteren vorteilhaften Ausgestaltung der Erfindung ist vorgesehen, daß die Form aus einem inneren Teilbereich und einem diesen umgebenden Randbereich besteht, die durch einen Spalt voneinander getrennt sind. Wird z. B. ein Teller hergestellt, so formt der innere Teilbereich der Form den Bodenbereich des Tellers, während der den inneren Teilbereich umgebende Randbereich die Seitenwand bzw. den Tellerrand formt. Beim Verformungsvorgang drückt sich dabei etwas von der Kunststoffolie in den ringförmigen Spalt, so daß sich im Bodenbereich ein ringförmige Wulst ergibt, die dem Teller eine größere Stabilitit verleiht. Ein weiterer Vorteil dieser Ausgestaltung ist darin zu sehen, daß der spalt sowohl als Vakuumkanal als auch als Druckluftkanal zum Auswerfen des fertigen Formlings dienen kann.

Im folgenden wird die Erfindung anhand von Zeichnungen dargestellt und näher erläutert.

Es zeigen

Fig. 1 die schematische Seitenansicht auf die kombinierte Verformungs-Trennstation;

Fig. 2 Querschnitt der Verformungs-Trennvorrichtung im Ausschnitt;

Fig. 3 im Ausschnitt einen Querschnitt durch die Form- und Trennvorrichtung ohne Prägestempel;

Fig. 4 im Ausschnitt einen Querschnitt durch die Form- und Trennvorrichtung mit zusammenwirkenden Bandstählen;

Fig. 5 in abgebrochener Darstellung die Bandstahlschneide in einer ersten Aordnung;

Fig. 6 in abgebrochener Darstellung die Bandstahlschneide in einer zweiten Anordnung;

Fig. 7 im Ausschnitt einen Querschnitt durch die Form- und Trennvorrichtung mit geteilter Form;

Fig. 8 schematische Seitenansicht der Gesamtvorrichtung zur Herstellung von Kunststoffformlingen;

Fig. 9 Vorrichtung gemäß Fig. 8 in Draufsicht, wobei aus Übersichtlichkeitsgründen die obere Kunststoffbahn und die oberhalb der oberen Kunststoffbahn angeordneten Vorrichtungsstationen weggelassen wurden.

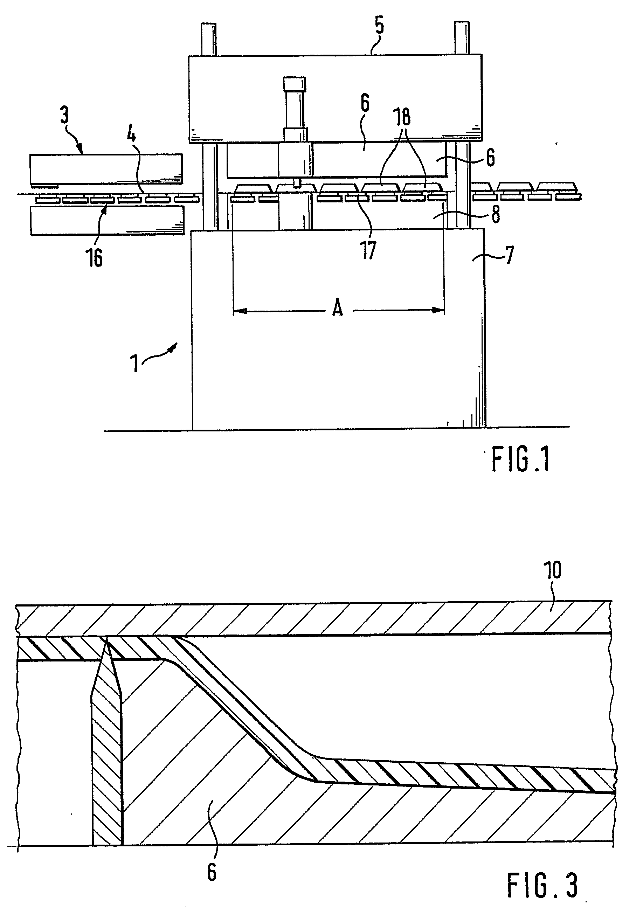

In der Fig. 1 ist eine Thermoverformungs- und eine Trennvorrichtung insgesamt mit dem Bezugszeichen (1) versehen. Bei der Vorrichtung (1) ist eine Heizstrecke (3) zur Erwärmung der Kunststoffolie (4) auf z. B. 120 Grad angeordnet. Im vorliegenden Fall trägt der Hubtisch (5) eine Formtasse (6), wohingegen der untere Hubtisch (7) eine Prägung (8) trägt, wobei jedoch zwischen unterem Hubtisch (7) und der Prägung (8) noch eine Kühlplatte (9) und eine Stanzplatte (10) angeordnet sind. Zwischen der Formtasse und dem oberen Hubtisch (5) ist eine unabhängige von der Formtasse heb- und senkbare obere Stanzplatte (11), sowie eine oberhalb der Stanzplatte (11) angeordnete weitere obere Kühlplatte vorgesehen. Nicht dargestellt sind die Zuführungen für das Kühlmedium bzw. für die Druckluft zur Druckluftverformung bzw. zu Ausstoßen des Formlings. Ebenfalls nicht dargestellt ist die Vakuumerzeugung für die alternativ mögliche Vakuumverformung. Lediglich die Kanäle (12), durch die die Luft aus dem Formraum abgezogen werden kann, sind dargestellt.

Anzufügen ist noch, daß die Formtasse auch am unteren Hubtisch und die Prägung am oberen Hubtisch angeordnet sein können. In der Formtasse (6) sind in Richtung der Hubbewegung Aussparung vorgesehen, die die Ausformungen der Formtasse (6) entsprechend den gewünschten Randabmessungen der Formlinge umgeben. In diesen Aussparungen sind Bandstähle (13) geführt, die an der oberen Stanzplatte (11) befestigt sind. An ihrem freien Ende weisen die Bandstähle Schneiden (14) auf, die im Durchmesser kleiner sind als der restliche Bandstahl. Die Schneidenlänge beträgt im vorliegenden Beispiel ca. 2 mm, so daß oberhalb der Schneide auf beiden Seiten derselben eine Schulter (15) entsteht. Ausgelöst wird sowohl die Hubbewegung für den Verformungsvorgang als auch für den Trennvorgang von einem einzigen Druckmittelzylinder, welcher in der Zeichnung nicht dargestellt ist.

Unterhalb der Folienbahn (4) verläuft ein spezieller Kettenförderer (16), dessen Kettenglieder (17) zu ihrer Schwenkbeweglichkeit mit einem gewissen Spiel behaftet sind. Dieser im dargestellten Fall unterhalb der Folie (4) verlaufende Kettenförderer (16) transportirt die Folie (4) aus der Heizstrecke (3) in die Verform-Trennvorrichtung (1), in der über einen Längenabschnitt (A) eine bestimmte Anzahl zu einer Formlingseinheit (17) verbundene Formlinge (18) mittels Vakuum oder Preßluft tiefgezogen werden. Aus der Vorrichtung (1) werden die Formlinge (18) sodann von dem Kettenförderer (16) zu weiteren Bearbeitungsstationen transportiert. Da die Kunststoffolie (4) unmittelbar nach Verlassen der Heizstrecke (3) einem Abkühlprozeß unterworfen ist, ist die und auch die in der Vorrichtung (1) geformte Formlingseinheit (17) einer stetigen Schrumpfung unterworfen. Dadurch, daß die Formlinge (18) direkt im Anschluß an die Verformung in derselben Station bei noch geschlossener Form aus der Formlingseinheit (17) herausgetrennt werden, ist ein exaktes Arbeiten bzw. die exakte Trennung der einzelnen Formlinge entlang den gewünschten Umfangslinien gewährleistet. Die besondere Ausgestaltung der Bandstahlschneiden (14) bringt es dabei mit sich, daß beim Durchtrennen der Folienbahn dieselbe zwischen den Schultern (15) im Bandstahl (13) und der Stanzplatte eingeklemmt wird. In diesem Zustand werden die Ränder der Formlinge verschweißt. Der Ablauf des Herstellungsverfahrens der Formlinge ist wie folgt: Die in die geöffnete Vorrichtung (1) eingelegte Folienbahn (4), die in der vorgeschalteten Heizstrecke (3) erwärmt worden ist, wird durch Schließen der Vorrichtung (1), d. h., durch eine relative Aufeinanderbewegung von Prägung und Formtasse oder der Herstellung entweder eines Vakuums oder durch Druckbeaufschlagung unter Verzicht auf die Prägung verformt. Zu diesem Zweck führt der nicht dargestellte Druckmittelzylinder einen pneumatischen Eilhub aus. Dann findet im Druckmittelzylinder die Umschaltung von pneumatischem auf hydraulischen Betrieb statt. Der Druckmittelzylinder führt einen hydraulischen Krafthub aus, der die Bandstähle mit ihren Schneiden durch die Folie auf die untere Stanzplatte drückt. Dabei werden die noch "eingespannten" Formlinge aus dem Formlingsverband herausgetrennt. Gleichzeitig werden durch die besondere Formgebung der Schneiden (14, 15) bzw. durch die aufgeheizten Bandstähle die Formlingsränder verschweißt. Über die Bohrungen (12) werden die ausgestanzten Formlinge mit Hilfe von Druckluft ausgeworfen und über den Kettenförderer (16) aus der Vorrichtung (1) herausbefördert.

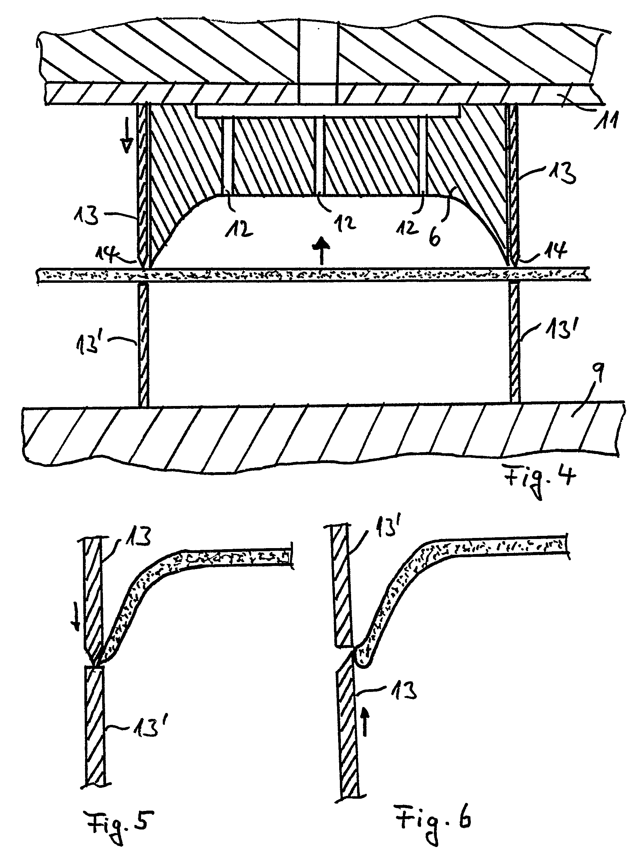

In der Fig. 3 ist ein Verformungswerkzeug dargestellt, das lediglich aus einer Formtasse (6) besteht. Durch Anlegen z. B. eines Vakuums wird die Folie in die Formtasse (6) hineingezogen (Negativverformung), der Abstand der Stanzplatte (10) zum tiefesten Punkt der Formtasse wird dabei konstant gehalten. In diesem Ausführungsbeispiel weisen die Bandstähle eine spitz zulaufende Schneide auf.

In der Fig. 4 ist eine bevorzugte Ausführungsform der Erfindung dargestellt. Im Gegensatz zur Ausführungsform gemäß der Fig. 3 wird hier auf die Stanzplatte (10) verzichtet. Stattdessen wirken hier die Bandstahlschneiden (13) mit entsprechenden Bandstählen (13') zusammen. In dem dargestellten Ausführungsbeispiel ist ebenfalls, wie in Fig. 3, auf die Prägung verzichtet und die Verformung der Kunststoffolie wird durch das Zusammenwirken der Formtasse (6) mit einem angelegten Vakuum bewirkt. Im übrigen arbeitet die Trenn- und Verformungsvorrichtung gemäß Fig. 4, wie die in Fig. 3 dargestellte.

In der Fig. 5 ist schematisch der Trennvorgang dargestellt, bei dem die Schneide des Bandstahls (13) vom Boden des Formlings weg nach unten am Rand des Formlings vorbeistreicht. Somit ergibt sich eine schräg nach außen verlaufende Kontur mit einer scharfen Schnittkante. Demgegenüber ist in Fig. 6 ein Trennvorgang dargestellt, bei dem die Schneide des Bandstahls (13) in Richtung auf den Boden des Formlings am Rand des Formlings vorbeistreicht, wobei die Schneide das Formlingsmaterial nach oben zieht. Somit ergibt sich ein etwas nach innen gerichteter, abgerundeter Rand des Formlings.

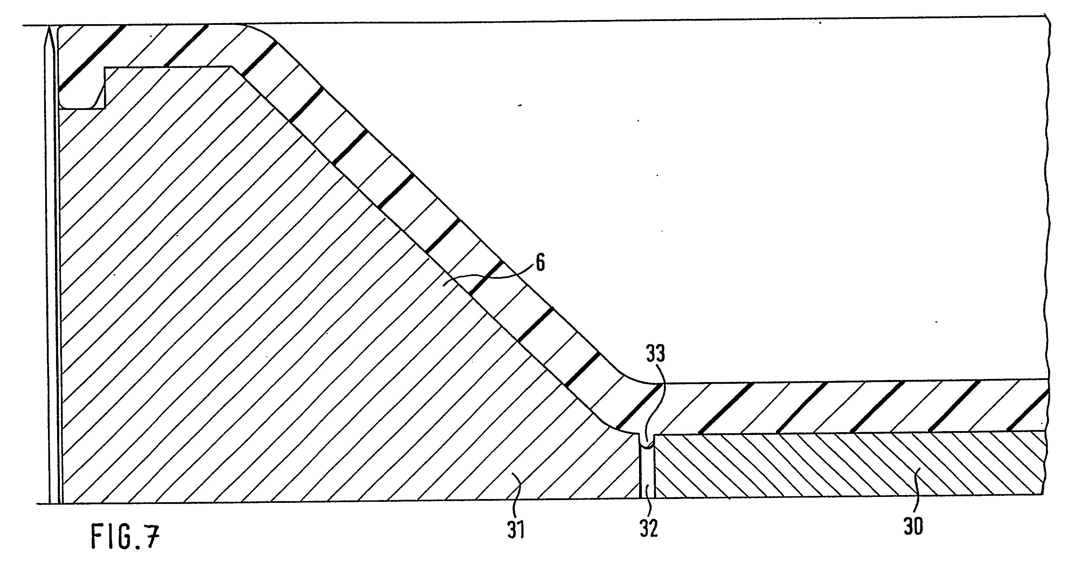

In der Fig. 7 ist eine weitere Ausführungsform der Erfindung dargestellt. Wie in den Fig. 3 und 4 wird auch hier auf die Prägung verzichtet und die Verformung der Kunststoffolie durch das Zusammenwirken der Formtasse (6) mit einem angelegten Vakuum bewirkt. Diese Formtasse ist zweiteilig ausgeführt, wobei ein innerer Teilbereich mit dem Bezugszeichen (30) und ein diesen umgebender Randbereich mit dem Bezugszeichen (31) versehen ist. Zwischen den beiden Bereichen (30 und 31) ist ein Spalt (32) gelassen, in dem sich beim Verformvorgang Material der Kunststoffolie hineindrückt. Dieses Material bildet in dem Spalt eine in sich geschlossene Ringwulst (33). An seiner oberen äußeren Kante weist der Randbereich (31) eine umlaufende Nut (34) auf, in die sich beim Verformungsvorgang ebenfalls Material der Folie hineinzieht. So wird auch an dieser Stelle eine in sich geschlossene Ringwulst (35) gebildet. Ganz links ist in der Zeichnung der für die Trennung verantwortliche Bandstahl mit seiner Schneide dargestellt.

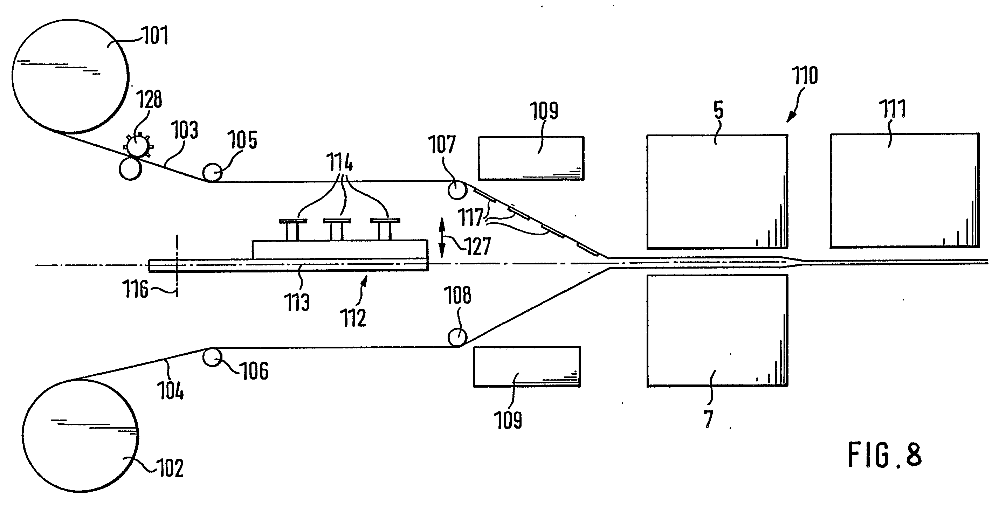

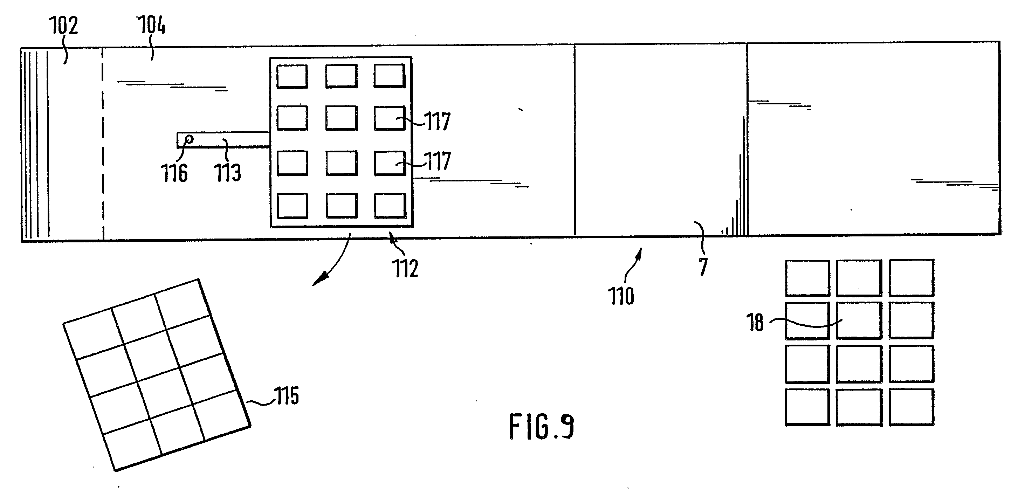

Die Fig. 8 zeigt eine weiteres Ausführungsbeispiel der erfindungsgemäßen Vorrichtung. In der Fig. 1 sind mit den Bezugszeichen (101 und 102) zwei im vertikalen Abstand zueinander angeordnet Wickel für eine obere (103) und eine untere (104) Kunststoffoliebahn bezeichnet. Die Kunststoffolienbahn (103 und 104) werden von Wickeln (101 und 102) abgewickelt und um Rollen (105 und 106) herumgeführt, so daß die Folienbahn (103 und 104) im parallelem Abstand zueinander verlaufen. Im weiteren Verlauf der Kunststoffolienbahnen werden diese um Rollen (107 und 108) herumgeführt, wodurch sie schräg aufeinander zuverlaufend weitertransportiert werden. Im Verarbeitungsrichtung hinter den Rollen (107 und 108) ist eine Erwärmungsstation (109) angeordnet, an die sich eine kombinierte Form- und Trennstation (110) anschließt. Der Form- und Trennstation (110) ist eine Stapelstation (111) nachge schaltet. Zwischen den Rollen (105, 106; 107, 108) ist im Zwischeraum zwischen den dort parallel verlaufenden Kunststoffbahnen (103 und 104) eine Etikettiervorrichtung (112) angeordnet. Die Etiketiervorrichtung (112) weist einen Ausleger (113) auf, der auf seiner zur Folienbahn (103) hinweisenden Seite Werkzeuge (114) trägt, die aus einem in der Fig. 9 dargestellten Magazin (115) Ausschnitte (117) eines saugfähigen Materials, z. B. einer zellstoffschicht, entnehmen. Hierzu ist der Ausleger (113) um die Achse (116) aus der Verarbeitungslinie, d. h. aus dem Zwischenraum zwischen den Kunststoffolien (103 und 104) unter die Abgabeöffnungen des Magazins (115) herausschwenkbar. Gleichzeitig ist der Ausleger (113) gemäß dem Doppelpfeil (127) heb- und senkbar ausgeführt.

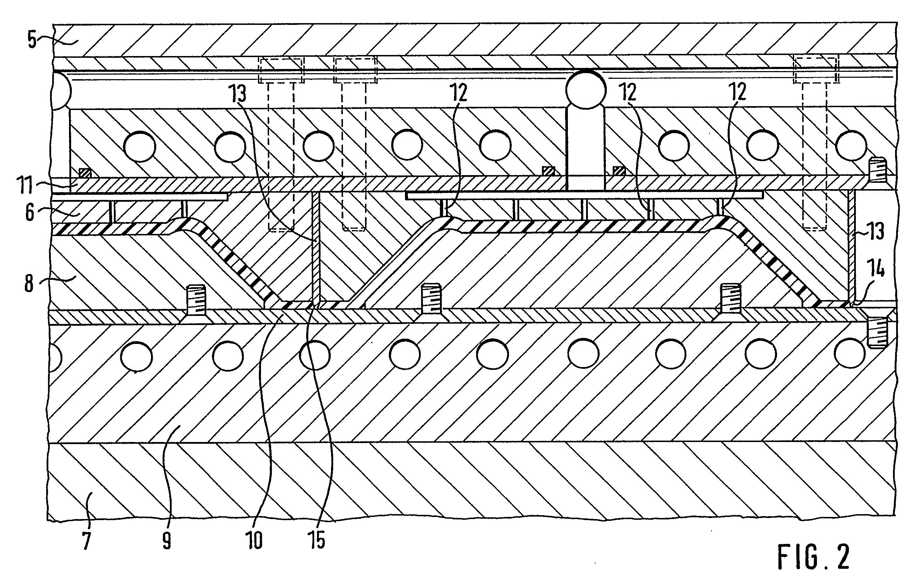

Die Kunststoffolien (103 und 104) werden taktweise durch die gesamte Vorrichtung transportiert. Bei jedem Takt, d. h. bei jedem Stillstand der Transportvorrichtung ist der Ausleger (113) unter die Kunststoffolie (103) geschwenkt. In dieser Stellung wird er angehoben und gibt die auf der Oberseite seiner Werkzeuge (114) befindlichen Ausschnitte (117) beim Hubvorgang an die Unterseite der Kunststoffolie (103) ab. Dort werden sie befestigt. Dann wird der Ausleger (113) wieder abgesenkt und schwenkt erneut unter die Ausgabeschächte des Magazins (115), wo er wieder angehoben wird und eine weitere Anzahl von Ausschnitten (117) des Zellstoffmaterials aufnimmt. Wenn der Ausleger wieder in seine Arbeitsposition zurückschwenkt, bewegen sich die Kunststoffolien (103 und 104) in Richtung auf die Erwärmstation (109) weiter. In der Station (109) werden die Kunststoffolien (103 und 104) erwärmt und in diesem erwärmten Zustand der Form- und Trennstation (110) zugeführt. Die Form- und Trennstation (110) entspricht in ihrem Aufbau der Vorrichtung gemäß den Fig. 1 bis 7. Die Anordnung der Werkzeuge (114) auf dem Ausleger (113) korrespondiert dabei mit der Anordnung der Formtassen bzw. -prägungen in der Form- und Trennstation (110). Somit ist gewährleistet, daß die mit Hilfe der Werkzeuge (114) an der oberen Kunststoffolie (103) angebrachten Zelluloseausschnitte (117) jeweils genau in dem Bereich der Kunststofffolie (103) angeordnet werden, der den Bodenbereich des späteren Formlings bildet. Dabei weisen die Abmessungen der Ausschnitte und die Abmessungen des Bodens gewisse Differenzen auf. Diese Toleranzen sind notwendig, damit in jedem Fall eine innige Verbindung der Kunststoffolien (103 und 104) im Randbereich des Formlings gewährleistet ist.

Die erwärmten Kunststoffolien (103 und 104) mit den dazwischen angeordneten Zellstoffausschnitten (117) werden in den Formtassen und Prägungen zu Formlingen verformt. Bei noch geschlossener Form werden die Formlinge aus dem Formlingsverband herausgetrennt. Das geschieht wie bei der Vorrichtung gemäß den Fig. 1 bis 7 mit Hilfe von Bandstahlschneiden, die in Form der Formlingsumrisse angeordnet sind. Die Bandstahlschneiden verschweißen dabei die aufeinandergepreßten Kunststofffolien (103 und 104) im Kantenbereich des Formlings miteinander. Im folgenden Takt werden die Formlinge in der Stapelstation aus dem Folienlaminat herausgehoben und seitlich aufgestapelt. Der Folienlaminatverschnitt kann dann einer Wiederverwendung zugeführt werden.

Bei jedem Takt, d. h. immer wenn der Vortrieb der Folienbahnen (103 und 104) unterbrochen ist, wird die Folienbahn gleichzeitig mit Zellstoffausschnitten Versehen, werden die Formlinge ausgeformt, aus dem Matrixverband herausgetrennt und werden die bereits fertigen Formlinge mit Hilfe der Stapelstation gestapelt.

Damit der Saft bzw. das Blut aus dem später zu verpackenden Fleisch von dem Zellostoffausschnitt aufgenommen werden kann, sind im Bereich der aufgebrachten Zellstoffausschnitte auf der oberen Kunststofolie (103) in dieser in einem regelmäßigen oder unregelmäßigen Muster Löcher angeordnet. Das Lochmuster wird durch die Lochrollen (128) in die Folie (103) eingebracht.

## Ansprüche

1. Verfahren zur Herstellung von Kunstoffteilen, insbesondere von Kunststofformlingen wie z. B. Kunststoffschalen, die aus mindestens einer erwärmten Kunststoffolie in einer Verformungsvorrichtung zu Formlingen tiefgezogen und die Formlinge sodann in einer Trennvorrichtung aus dem Formlingsverband herausgetrennt werden und mit Hilfe einer Transportvorrichtung zu nachfolgenden Bearbeitungsstationen, wie einer Bedruckungseinheit oder einer Stapelvorrichtung u. s. w. gefördert werden, dadurch gekennzeichnet, daß die Verformung und die Trennung der einzelnen Forlinge (18) aus der noch warmen Folie (4; 103, 104) in einer Station (1, 110) direkt aufeinanderfolgend durchgeführt werden, wobei zuerst die Verformung stattfindet und dann die Trennung durch Bandstahlabschnitt (13, 14, 15), während die Form (6, 8) noch im geschlossenen Zustand verweilt.

2. Verfahren nach Anspruch 1, dadurch gekennzeichnet, daß bei der Trennung durch Bandstahlabschnit die Kanten der Formlinge (18) verschweißt werden.

3. Verfahren nach Anspruch 1 oder 2, dadurch gekennzeichnet, daß beim Formen und Trennen jeweils zwei Randstähle, von denen einer mit einer Schneide versehen ist, zusammenwirken, die die Außenkonturen der Formwerkzuege bilden.

4. Verfahren nach einem der Ansprüche 1 bis 3, dadurch gekannzeichnet, daß der mit der Schneide versehene Bandstahl eine Relativbewegung entgegen der Verformungsrichtung ausführt.

5. Verfahren nach einem der Ansprüche 1 bis 3, dadurch gekennzeichnet, daß der mit der Schneide versehene Bandstahl eine Relativbewegung in Richtung der Verformung ausführt.

6. Verfahren nach einem der Ansprüche 1 bis 5, dadurch gekennzeichnet, daß die Bandstähle aufgeheizt werden.

7. Verfahren nach einem der Ansprüche 1 bis 6, dadurch gekennzeichnet, daß zum Antrieb des Verformungs- und Trennhubes der gleiche Druckmittelzylinder dient.

8. Verfahren nach Anspruch 7, dadurch gekennzeichnet, daß der Druckmittelzylinder zum verformen einen pneumatischen Eilhub und einen hydraulischen Krafthub ausführt, der mit Hilfe der Bandstahlschneiden die Konturen des Formlings (18) in die verformte Folie einprägt und welcher in seiner Endphase die Formlinge (18) aus dem Formlingsverband heraustrennt.

9. Verfahren nach einem der Ansprüche 1 bis 6, dadurch gekennzeichnet, daß der Verformungs- und Trennhub durch einen mechanischen Antrieb bewirkt werden.

10. Verfahren nach einem der Ansprüche 1 bis 9, gekennzeichnet durch Druck- oder Vakuumverformung.

11. Verfahren nach Anspruch 10, dadurch gekennzeichnet, daß die zur Erzeugung des Vakuums vorgesehen Kanäle als Druckluftkanäle für den Auswurf des fertigen Formlings (18) dienen.

12. Verfahren nach einem der Ansprüche 1 bis 11, dadurch gekennzeichnet, daß die Kunststoffolie (4, 103, 104) sowohl positiv als auch negativ verformbar ist.

13. Verfahren nach einem oder mehreren der Ansprüche 1 bis 12, dadurch gekennzeichnet, daß zwei Kunststoffolienbahnen (103, 104), von denen eine (103) mit einem Lochmuster versehen ist, übereinanderliegend angeordnet der Verformungs- und Trennvorrichtung (110) zugeführt werden, wobei auf einer der beiden Folienbahnen (103) vor ihrer Vereinigung mit der anderen Bahn (104) und vor der Erwärmung der beiden Folienbahnen (103, 104) auf ihrer zur anderen Folienbahn (104) inweisenden Oberfläche Ausschnitte (117) aus saugfähigem Material in einer Anordnung befestigt werden, die der Anordnung der später ausgeformten Formlinge (18) im Formlingsverband entspricht, wobei die Ausschnitte (117) in etwa mit den Umrissen des Bodens der ausgeformten Formlinge (18) korrespondieren, und daß beim Formvorgang die Kunststoffolien (103, 104) im Randbereich der Formlinge (18) miteinander verbunden und beim Trennvorgang die Kanten der Formlinge (18) verschweißt werden.

14. Verfahren nach Anspruch 13, dadurch gekennzeichnet, daß die Ausschnitte (117) aus saugfähigem Material mit Hilfe einer Etikettiervorrichtung (112) an der Kunststoffolie (103) angebracht werden, wobei die Etikettiervorrichtung (112) im periodischen Wechsel die Ausschnitte (117) aus einem seitlich neben den Folienbahnen (103, 104) angeordneten Magazin (115) entnimmt und nach Zurückfahren zwischen die Folienbahnen (103, 104) die aufgenommenen Ausschnitte (117) gegen die Folienbahn (103) drückt.

15. Vorrichtung zur Durchführung des Verfahrens nach den Ansprüchen 1 bis 14, bestehend im wesentlichen aus einer Verformungs- und einer Trennvorrichtung für die Formlinge, wobei die Verformungsvorrichtung im wesentlichen aus einer Prägung und/oder einer zu dieser komplementären Formtasse besteht, dadurch gekennzeichnet, daß die Formtasse (6) parallel zur Hubrichtung der Verformungsvorrichtung (1, 110) verlaufende Aussparungen als Führungen für Schneidwerkzeuge (13, 14) aufweist.

16. Vorrichtung nach Anspruch 15, dadurch gekennzeichnet, daß die Schneidwerkzeuge (13, 14) aus Bandstahl (13) bestehen, der an seinem freien Ende eine Schneide (14) aufweist.

17. Vorrichtung nach den Ansprüchen 15 und 16 dadurch gekennzeichnet, daß in der Trennvorrichtung jeweils zwei miteinander zusammenwirkende und gegeneinander bewegbare Bandstähle (13, 13') entlang den Außenkonturen der Formwerkzeuge angeordnet sind, von denen einer mit der Schneide (14) versehen ist.

18. Vorrichtung nach Anspruch 16 oder 17, dadurch gekennzeichnet, daß der Übergang von Bandstahl (13) zur Schneide (14) stufenförmig ausgebildet ist.

19. Vorrichtung nach den Ansprüchen 15 bis 18, dadurch gekennzeichnet, daß der Antrieb für die Hubbewegungen der Verformungsvorrichtung und der Schniedvorrichtung durch einen Druckmittelzylinder gebildet ist.

20. Vorrichtung nach Anspruch 19, dadurch gekennzeichnet, daß der Druckmittelzylinder von pneumatischer auf hydraulische Betätigung und umgekehrt schaltbar ist.

21. Vorrichtung nach den Ansprüchen 15 bis 20, dadurch gekennzeichnet, daß die Form (6) aus einem inneren Teilbereich (30) und einem diesen umgebenden Randbereich (31) besteht, die durch einen Spalt (32) voneinander getrennt sind.

22. Vorrichtung nach einem oder mehreren der Ansprüche 15 bis 21, gekennzeichnet durch eine Abgabestation (101, 102) für zwei Kunststoffolienbahnen (103, 104), von der die Folienbahnen (103, 104) in parallelem Abstand voneinander der der Abgabestation (101, 102) nachgeordneten Erwärmungsstation (109) zugeführt werden, und durch die Anordnung eine Etikettiervorrichtung (112) zwischen der Abgabe- (101, 102) und der Erwärmungsstation (109) und zwischen den Folienbahnen (103, 104), und durch die Anordnung der kominierten Form- und Trennvorrichtung (110) anschließend an die Erwärmungsstation (109).

23. Vorrichtung nach Anspruch 22, dadurch gekennzeichnet, daß die Etikettiervorrichtung (112) einen Ausleger (113) aufweist, der heb- und senkbar ist und in horizontaler Richtung senkrecht zur Folienbewegungsrichtung aus dem Bereich zwischen den beiden Folienbahnen (103, 104) unter die Abgabeöffnungen eines neben den Folienbahnen (103, 104) angeordneten Magazins (115) für die Ausschnitte (117) aus saugfähigem Material - schwenkbar ist.

FIG.1

FIG.3

FIG. 2

Fig. 4

Fig. 5

Fig. 6

FIG.7

EP 0 297 522 A2

FIG.8

FIG.9